(19) Europäisches Patentamt
European Patent Office
Office européen des brevets

(11) **EP 2 666 718 B1**

(12) **FASCICULE DE BREVET EUROPEEN**

(45) Date de publication et mention
de la délivrance du brevet:
**21.07.2021 Bulletin 2021/29**

(51) Int Cl.:
***B64C 27/26*** *(2006.01)*

(21) Numéro de dépôt: **13002571.1**

(22) Date de dépôt: **16.05.2013**

(54) **Procédé de commande des volets d'ailes et de l'empennage horizontal d'un hélicoptère hybride**

Verfahren zur Steuerung der Flügelklappen und des horizontalen Leitwerks eines Hybridhelikopters

Method for controlling the wing flaps and the horizontal tail of a hybrid helicopter

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **21.05.2012 FR 1201434**

(43) Date de publication de la demande:
**27.11.2013 Bulletin 2013/48**

(73) Titulaire: **Airbus Helicopters
13725 Marignane Cedex (FR)**

(72) Inventeur: **Eglin, Paul
13830 Roquefort LA Bedoule (FR)**

(74) Mandataire: **GPI & Associés
EuroParc de Pichaury
Bâtiment B2 - 1er Etage
1330, rue Guillibert de la Lauzière
13856 Aix-en-Provence Cedex 3 (FR)**

(56) Documents cités:
**EP-A1- 2 383 184        WO-A2-2005/005250
FR-A1- 2 916 419        FR-A1- 2 916 420
US-A1- 2008 237 392**

• **None**

EP 2 666 718 B1

**Description**

La présente invention est définie dans les revendications.

La présente invention se rapporte au domaine technique de la mécanique du vol d'un aéronef à voilure tournante. Elle concerne un procédé de commande d'un tel aéronef en phase de vol à vitesse élevée et stabilisée. Elle concerne également un dispositif de commande d'un tel aéronef.

Ce procédé et ce dispositif sont plus particulièrement destinés aux hélicoptères hybrides, c'est-à-dire aux aéronefs à voilure tournante équipés d'une propulsion auxiliaire.

L'aéronef à voilure tournante comporte classiquement au moins un rotor principal, assurant à la fois la sustentation et la propulsion de l'aéronef, un fuselage et une motorisation.

L'hélicoptère hybride comporte de plus au moins une hélice propulsive ainsi qu'une surface sustentatrice, généralement composée de deux demi-ailes situées de part et d'autre du fuselage et d'un empennage horizontal positionné à une extrémité de l'aéronef.

Par exemple, deux hélices propulsives à pas variable sont positionnées de part et d'autre du fuselage, sur chaque demi-aile.

De plus, chaque demi-aile peut être équipée d'au moins un volet mobile permettant de modifier la portance de chaque demi-aile. De même, l'empennage horizontal comporte au moins une surface mobile afin de modifier la portance de l'empennage horizontal. Cette surface mobile peut être constituée par une gouverne de profondeur ou par l'empennage horizontal dans son intégralité.

La fonction principale des deux demi-ailes est une participation à la sustentation de l'hélicoptère hybride en vol à vitesse d'avancement élevée, la ou les hélices propulsives permettant d'atteindre une telle vitesse. A contrario, on peut parler de vol à vitesse modérée pour les vols à des vitesses d'avancement inférieures.

En vol à vitesse d'avancement élevée, l'empennage horizontal mobile ou la gouverne de profondeur de l'hélicoptère hybride sont équivalents à un compensateur de profondeur d'un avion, également désigné par son équivalence en langue anglaise « trim ». Le contrôle en tangage de l'hélicoptère hybride est réalisé par l'intermédiaire de la commande cyclique du rotor principal, alors que l'empennage horizontal mobile (ou sa gouverne de profondeur) permet d'ajuster l'équilibre en tangage de l'aéronef selon des critères prédéfinis tels que l'assiette de l'aéronef ou bien le moment de flexion du mât du rotor principal. Les demi-ailes assurent, dans cette configuration, une participation à la portance totale de l'aéronef nécessaire à la sustentation de l'aéronef. Par suite, le rotor principal exerce partiellement la sustentation de l'hélicoptère hybride en vol à vitesse d'avancement élevée avec éventuellement une contribution à son avancement.

On constate donc que le pilotage d'un hélicoptère hybride en vol à vitesse d'avancement élevée nécessite des commandes spécifiques afin de modifier les portances des demi-ailes et de l'empennage horizontal ainsi que le pas des hélices propulsives.

En conséquence, lors d'un vol à vitesse d'avancement élevée, la charge de travail du pilote est importante et complexe afin de gérer les commandes spécifiques de l'hélicoptère hybride en complément des commandes traditionnelles d'un aéronef à voilure tournante.

La présente invention a alors pour objet de proposer un procédé d'aide au pilote, afin de déterminer et d'ajuster les portances des demi-ailes et de l'empennage horizontal spécifiques à cet hélicoptère hybride lors d'une phase de vol stabilisée.

On entend par « phase de vol stabilisée » un vol à vitesse d'avancement élevée, donc concernant les hélicoptères hybrides, dont les conditions de vol sont constantes, c'est-à-dire que les principaux paramètres de vol sont constants. Il s'agit notamment de la vitesse verticale et de la trajectoire de l'aéronef. La vitesse verticale constante peut être obtenue notamment en maintenant l'assiette et/ou l'incidence de l'aéronef constante. Dans le cas particulier où la vitesse verticale est nulle, la phase de vol stabilisée se déroule à une altitude constante, on parle alors de vol de croisière. Une trajectoire constante correspond à une trajectoire sans changement de direction de l'aéronef. Lors de cette phase de vol stabilisée, la vitesse d'avancement est également de préférence constante. Cependant, elle peut évoluer en général lentement. Le procédé selon l'invention, ayant une évolution dynamique lente, est compatible avec cette évolution de la vitesse d'avancement.

On connait le document US2008/0237392 qui décrit un hélicoptère hybride utilisant un système de contrôle de l'ensemble des commandes de l'aéronef. En effet, l'aéronef intègre des bases de données comprenant des paramètres de vol optimisés et prédéfinis pour différentes conditions de vol et différents types de vol.

Le pilote choisit le type de vol qu'il souhaite réaliser, par exemple minimiser la consommation de carburant, minimiser les vibrations ou encore favoriser la vitesse d'avancement. Le système de contrôle détermine les conditions de vol par l'intermédiaire de différents capteurs intégrés à l'hélicoptère hybride et choisit alors dans les bases de données les réglages prédéfinis des différentes commandes de l'aéronef correspondant à ces conditions de vol.

Le système de contrôle communique alors ces réglages prédéterminés au pilote automatique qui les applique sans intervention du pilote aux différents organes de pilotage de l'hélicoptère hybride.

Le document FR2959205 décrit un procédé de commande et de régulation de l'angle de braquage d'un empennage horizontal d'un hélicoptère hybride à vitesse d'avancement élevée et stabilisée. L'objectif de ce réglage de l'angle de braquage est l'optimisation de la puissance consommée par l'aéronef.

Ce procédé se compose de trois boucles de régulation. La première boucle commande l'assiette de l'aéronef, par l'intermédiaire du pas cyclique longitudinal et la seconde boucle commande la vitesse d'avancement de l'aéronef, par l'intermédiaire du pas des hélices propulsives. Ces deux boucles assurent la stabilisation de l'aéronef en assiette longitudinale et vitesse d'avancement. Enfin, la troisième boucle optimise la puissance de l'aéronef, par l'intermédiaire de l'angle de braquage de l'empennage horizontal, en maintenant l'assiette longitudinale et la vitesse d'avancement constantes.

En effet, une variation de l'angle de braquage de l'empennage horizontal modifie sa portance. Par suite, l'assiette longitudinale de l'aéronef étant maintenue constante par la première boucle de régulation, cette variation de la portance de l'empennage horizontal permet de soumettre le fuselage à un moment de tangage piqueur ou cabreur. Il convient alors d'agir sur l'orientation du rotor principal pour le rendre « cabreur » c'est-à-dire incliné vers l'arrière de l'aéronef ou « piqueur » c'est-à-dire incliné vers l'avant de l'aéronef pour contrer, selon le besoin, l'effet du moment de tangage du à l'empennage.

Quand le rotor principal est piqueur, il est propulsif, c'est-à-dire qu'il participe à l'avancement de l'aéronef et est entraîné en rotation par la motorisation de l'aéronef. Par contre, quand le rotor principal est cabreur, il est en mode autogire, c'est-à-dire qu'il n'est pas entraîné en rotation par la motorisation, mais par l'écoulement d'air créé par l'avancement de l'aéronef. Dans ce cas, le rotor principal génère uniquement une portance.

En conséquence, une modification de l'angle de braquage de l'empennage horizontal a un effet sur le fonctionnement du rotor principal et notamment sur sa puissance consommée.

Par ailleurs, le document FR 2916420 décrit un hélicoptère hybride comportant au moins une gouverne de profondeur sur un empennage horizontale dont l'angle de braquage peut être commandé en fonction du moment de flexion du mât du rotor principal. De plus, la commande du pas cyclique des pales du rotor principal permet de piloter l'assiette longitudinale de l'hélicoptère hybride et la portance des ailes de cet hélicoptère hybride peut être un pourcentage particulier de sa portance totale en vol de croisière.

De plus, Le document WO 2005/005250 décrit un hélicoptère hybride dont les ailes fournissent environ 70% de la portance totale lors d'un vol de croisière.

On connait également le document FR 2916419 qui décrit un hélicoptère hybride dont la vitesse de rotation du rotor principal peut être réduite en vol de croisière. Le contrôle du pas cyclique longitudinal des pales du rotor principal permet alors de réduire la trainée du fuselage de l'hélicoptère hybride. De plus, cet hélicoptère comporte au moins une gouverne de profondeur sur un empennage horizontale dont l'angle de braquage peut être commandé afin d'annuler le moment de flexion du mât du rotor principal.

On connait également un dispositif de pilotage automatique d'un hélicoptère hybride assurant le maintien de l'incidence aérodynamique de l'aéronef constante et égale à une incidence de référence dans le cas d'un vol de croisière stabilisée. Pour maintenir cette incidence constante, le pilote automatique agit sur le pas collectif des pales du rotor principal.

De même, ce dispositif permet de maintenir l'assiette longitudinale de l'aéronef, autour de son axe de tangage, constante et égale à une assiette de référence dans le cas d'un vol de croisière stabilisée. Dans ce cas, le pilote automatique agit sur le pas cyclique longitudinal des pales du rotor principal.

En outre, le dispositif dispose d'un affichage sur lequel peuvent être représentées l'incidence de référence et l'assiette de référence. Le pilote peut alors visualiser sur cet affichage l'assiette et l'incidence courantes de l'aéronef et, le cas échéant, leurs valeurs de référence.

La présente invention a pour objet un procédé de commande d'un aéronef à voilure tournante à vitesse d'avancement élevée permettant de piloter simultanément les portances de ses demi-ailes et de son empennage horizontal lors d'une phase de vol stabilisée. Selon l'invention, un tel aéronef comporte un fuselage, au moins un rotor principal muni d'une pluralité de pales, au moins une hélice propulsive à pas variable, au moins une surface sustentatrice et au moins une motorisation entraînant en rotation le rotor principal et chaque hélice propulsive. La surface sustentatrice comporte deux demi-ailes positionnées de part et d'autre du fuselage ainsi qu'au moins un empennage horizontal positionné à une extrémité de l'aéronef et muni d'au moins une surface mobile.

Ce procédé permet de déterminer la portance totale nécessaire de l'aéronef, puis d'ajuster la portance des deux demi-ailes afin que la portance des deux demi-ailes représente un premier pourcentage prédéterminé de la portance totale de l'aéronef lors d'une phase de vol stabilisée. La portance des deux demi-ailes, qui est égale à la somme de la portance de chaque demi-aile, est ajustée en agissant sur un moyen aérodynamique de l'aéronef.

En effet, une phase de vol stabilisée correspond à un vol relatif à une trajectoire et une vitesse horizontale de l'aéronef constantes, la vitesse verticale étant constante, voire nulle. La réalisation d'un tel vol peut être obtenue notamment par l'intermédiaire d'un pilote automatique présent dans l'aéronef, régulant les commandes de pas cyclique longitudinal et de pas collectif des pales du rotor principal de l'aéronef. Le pas de l'hélice propulsive peut également être régulé par le pilote automatique.

Cependant, la stabilisation complète de l'aéronef, lors d'une phase de vol stabilisée, n'est pas assurée de façon optimum.

Tout d'abord au cours du vol, la portance totale de l'aéronef varie notamment en fonction de la masse de l'aéronef.

De plus, la masse volumique de l'air entourant l'aéronef varie en fonction de la température et de l'altitude, affectant le réglage en portance de l'aéronef.

Ensuite, la consommation de carburant allège l'aéronef au cours du vol. De plus, lors d'une mission, l'aéronef est amené à charger et décharger du fret ou des passagers, ce qui impacte sa masse.

Par ailleurs, la portance totale d'un aéronef s'oppose à son poids afin de maintenir l'aéronef en sustentation, le poids de l'aéronef étant obtenu par la multiplication de sa masse par l'accélération de la gravité terrestre. Par la suite, on entend par l'expression « portance totale » la portance nécessaire pour équilibrer le poids de l'aéronef.

Lorsque la portance totale de l'aéronef s'oppose exactement à son poids, l'aéronef évolue avec une accélération verticale nulle, c'est-à-dire à vitesse verticale constante. Lorsque cette portance totale est supérieure à ce poids, l'aéronef évolue avec une accélération verticale positive, c'est-à-dire que sa vitesse de montée augmente. A contrario, lorsque cette portance totale est inférieure à ce poids, l'aéronef évolue avec une accélération verticale négative, c'est-à-dire que sa vitesse de descente augmente.

De fait, pour maintenir une phase de vol stabilisée, la portance totale de l'aéronef doit être ajustée en permanence afin de s'adapter aux variations de la masse de l'aéronef et de la masse volumique de l'air.

Cette portance totale de l'aéronef est constituée principalement par la portance du rotor principal lors d'un vol à vitesse modérée. Par contre, lors d'un vol à vitesse d'avancement élevée, elle est constituée essentiellement par la somme de la portance du rotor principal et de la portance des demi-ailes. Le fuselage de l'aéronef et son empennage horizontal peuvent également avoir une contribution à cette portance totale de l'aéronef. Cependant, nous ne la prendrons pas en compte, celle-ci étant négligeable pour la majorité des aéronefs.

De fait, en vol à vitesse d'avancement élevée, la présence de ces demi-ailes permet de réduire la participation du rotor principal à la portance totale de l'aéronef. De plus, l'utilisation d'au moins une hélice propulsive permet également de réduire la participation du rotor principal à la propulsion de l'aéronef. En conséquence, la portance et la propulsion du rotor principal peuvent être réduites, et par suite, la traînée aérodynamique du rotor principal peut être également réduite.

Le procédé selon l'invention est remarquable en ce qu'il permet de déterminer la portance totale de l'aéronef et d'ajuster la portance des demi-ailes de l'aéronef afin que cette portance des demi-ailes soit égale à un premier pourcentage prédéterminé de la portance totale de l'aéronef.

On rappelle que la portance totale d'un aéronef s'oppose au poids de l'aéronef afin de maintenir l'aéronef en sustentation, ce poids étant défini à partir de la masse de l'aéronef. La masse de l'aéronef peut être déduite, par exemple, à partir de mesures de consommation de carburant de la motorisation de l'aéronef par l'intermédiaire de débitmètres installés sur cette motorisation. Ces mesures de consommation permettent de connaître la quantité, donc la masse, de carburant consommé. On peut ainsi, en la déduisant de la masse totale de l'aéronef au décollage, estimer la masse de l'aéronef à chaque instant.

Ce premier pourcentage prédéterminé permet que la répartition de la portance totale de l'aéronef entre les portances du rotor principal et des demi-ailes corresponde à des conditions correctes de fonctionnement de l'aéronef.

Cette répartition permet notamment d'optimiser la finesse aérodynamique du rotor principal, dans le cas d'une phase de vol stabilisée. Par exemple, cette répartition est telle que la portance des demi-ailes représente 40% de la portance totale de l'aéronef.

Ce procédé permet ensuite d'ajuster la portance des deux demi-ailes en agissant sur un moyen aérodynamique de l'aéronef.

De préférence, le moyen aérodynamique de l'aéronef comporte, sur chaque demi-aile, au moins un volet mobile en arrière d'une surface fixe et au moins un système de manœuvre de chaque volet. Cette manœuvre peut correspondre à un déplacement de ces volets, modifiant par exemple la surface de chaque volet, permettant ainsi de modifier la portance des demi-ailes, l'incidence des demi-ailes restant constante. Une modification de la portance peut également être obtenue, avec ou sans déplacement, par rotation de chaque volet.

De plus, le volet de chaque demi-aile peut être manœuvré de façons différentes afin d'obtenir une différence de portance entre les deux demi-ailes. Cette différence de portance entre les deux demi-ailes permet de compenser les effets du rotor principal, notamment en mouvement de roulis.

En effet, les flux d'air générés par la rotation du rotor principal affectent différemment les deux demi-ailes placées de part et d'autre du fuselage de l'aéronef. Ces flux sont tourbillonnants et vont de l'avant vers l'arrière sur une demi-aile et de l'arrière vers l'avant sur l'autre demi-aile. Ils créent ainsi une dissymétrie d'incidence entre les deux demi-ailes. De fait, un écart de portance apparait entre les deux demi-ailes et entraîne la mise en roulis de l'aéronef.

Pour compenser cet écart de portance et éviter ainsi la mise en roulis de l'aéronef, le pilote doit agir en permanence sur le pas cyclique latéral des pales du rotor principal. Le procédé selon l'invention permet de déterminer la différence de portance entre chaque demi-aile. Le procédé permet ensuite de manœuvrer chaque volet, par l'intermédiaire du système de manœuvre, afin d'ajuster les portances des deux demi-ailes et obtenir cette différence.

Le pilote n'a ainsi plus à prendre en charge cette compensation de la dissymétrie d'incidence entre les deux demi-ailes générée par le rotor principal.

De même, le procédé peut ajuster la portance de chaque demi-aile, en manœuvrant chaque volet de façons différentes par l'intermédiaire du moyen de manœuvre des volets, afin que le pas cyclique latéral des pales du rotor principal soit égal à un pas cyclique latéral de consigne. Dans ce cas, la différence de portance entre les deux demi-ailes ainsi obtenue permet de respecter un objectif d'assiette latérale de l'aéronef. Les volets des demi-ailes sont manœuvrés à basse fréquence afin que l'aéronef converge vers cette assiette latérale. Ce pas cyclique latéral de consigne est déterminé par le procédé et peut être fonction de la vitesse d'avancement de l'aéronef et de la densité de l'air.

De plus, le procédé selon l'invention est utilisé uniquement lors des phases de vol stabilisées. De fait, la vitesse d'avancement de l'aéronef doit être supérieure à 50 kts (50 nœuds). Par ailleurs, ce procédé doit être désactivé lors des changements d'évolutions de l'aéronef, notamment des virages. Par exemple, il sera actif uniquement lorsque l'angle de roulis de l'aéronef est inférieur à 10°. Enfin, pour éviter de s'opposer à une manœuvre du pilote de l'aéronef, le procédé est désactivé dès qu'une action sur les commandes de l'appareil de la part du pilote est détectée.

Selon un mode de réalisation, la portance des demi-ailes est déterminée notamment en fonction de la masse volumique $\rho$ de l'air dans les conditions de vol, de la masse de l'aéronef, de l'incidence de l'aéronef $\alpha_{fus}$, de la surface $S$ et d'un coefficient de portance $C_z$ des deux demi-ailes ainsi que la vitesse $TAS$ de l'aéronef par rapport à l'air environnant. Le coefficient de portance des demi-ailes est fonction de l'incidence $\alpha$ des demi-ailes. Des valeurs de ces coefficients de portance, couvrant les incidences possibles, sont établies par des mesures en soufflerie, et contenues dans une table stockée dans une mémoire de l'aéronef.

Par suite, la portance d'une aile est donnée par la formule générale suivante :

$$Z_{aile} = 1/2 . \rho . TAS^2 . S . C_z.$$

On connait également la formule donnant l'incidence de l'aéronef :
$\alpha_{fus} = \theta - Arcsin (V_z/TAS)$ où $\theta$ est l'assiette longitudinale de l'aéronef et $V_z$ la vitesse verticale de l'air par rapport à l'aéronef.

Les valeurs de l'assiette longitudinale de l'aéronef et ses vitesses sont obtenues par l'intermédiaire de capteurs qui sont présents traditionnellement sur les aéronefs à voilure tournante. De même, la masse volumique de l'air est déterminée par des tables relatives aux données de l'atmosphère standard.

De plus, l'incidence des demi-ailes est affectée par le rotor principal qui génère un flux d'air balayant les deux demi-ailes, créant ainsi une incidence d'interaction du rotor principal sur les deux demi-ailes. L'incidence de chaque aile $\alpha$ correspond alors à l'incidence de l'aéronef $\alpha_{fus}$ à laquelle est ajouté un effet d'interaction $\alpha_{Interaction}$, d'où :

$$\alpha = \alpha_{fus} + \alpha_{Interaction}.$$

Il est à noter que l'effet d'interaction $\alpha_{Interaction}$ tient aussi compte d'un éventuel décalage angulaire entre le fuselage et les demi-ailes ainsi que de l'angle de portance nulle des dites demi-ailes. De la sorte, $\alpha_{Interaction}$ est une correction d'incidence.

Cet effet d'interaction $\alpha_{Interaction}$ peut être quantifié par des essais en vol ou en soufflerie.

Le procédé détermine ainsi la portance des deux demi-ailes selon la formule :
$z_{aile} = 1/2 . \rho . TAS^2 . S . C_Z$, $C_Z$ étant le coefficient de portance moyenne des demi-ailes pour l'incidence $\alpha_{fus} + \alpha_{Interaction}$.

Le procédé ajuste ensuite cette portance des demi-ailes en agissant sur le moyen aérodynamique jusqu'à ce que cette portance corresponde au premier pourcentage prédéterminé de la portance totale de l'aéronef.

Dans un mode de réalisation préféré de l'invention, la portance des demi-ailes est ajustée en fonction de la masse de l'aéronef et à partir d'une valeur de la portance du rotor principal.

L'aéronef dispose d'une boite de transmission principale de puissance en liaison mécanique directe avec le rotor principal afin de transmettre le mouvement de rotation de la motorisation à ce rotor principal. Une pluralité de barres de soutien relie cette boite de transmission principale de puissance au fuselage de l'aéronef.

Le procédé selon l'invention détermine la valeur de la portance du rotor principal à partir de mesures d'efforts effectuées sur ces barres de soutien de la boite de transmission principale de puissance. En effet, une règle de transposition géométrique permet de déterminer la portance du rotor principal à partir des efforts mesurés sur ces barres de soutien. La somme des composantes verticales de ces efforts mesurés correspond à cette portance. De plus, l'inclinaison de ces barres de soutien est connue, les assiettes longitudinale et transversale de l'aéronef étant obtenues par des capteurs de l'aéronef. Les déformations éventuelles de ces barres de soutien générées par ces efforts mesurés ainsi que les effets d'un système d'amortissement sur ces barres de soutien sont négligés.

La portance totale d'un aéronef est constituée principalement par la somme de la portance du rotor principal et de la portance des demi-ailes dans le cas d'une phase de vol stabilisée. De plus, la portance des demi-ailes est égale à un premier pourcentage prédéterminé de la portance totale de l'aéronef selon le procédé.

En conséquence, la portance du rotor principal est égale à un second pourcentage prédéterminé de la portance totale de l'aéronef, la somme du premier pourcentage prédéterminé et du second pourcentage prédéterminé étant égale à 100%. Par exemple, si la portance des demi-ailes représente 40% de la portance totale de l'aéronef, la portance du rotor principal représente alors 60% de cette portance totale.

Le procédé, après avoir déterminé la valeur de la portance du rotor principal, ajuste alors la portance des demi-ailes en agissant sur le moyen aérodynamique afin que la valeur de la portance du rotor principal soit égale à ce second pourcentage prédéterminé de la portance totale de l'aéronef.

Dans un autre mode de réalisation de l'invention, le procédé permet de déterminer et d'ajuster la portance de l'empennage horizontal en agissant sur un moyen de manœuvre de la surface mobile de l'empennage horizontal afin qu'une puissance du rotor principal soit égale à une puissance de consigne.

En effet, la motorisation d'un aéronef dispose généralement d'au moins une zone dans laquelle son fonctionnement est optimum, par exemple pour minimiser la consommation de carburant ou bien disposer d'une puissance maximum. A cette zone correspond en général au moins une puissance du rotor principal, qui peut être utilisée comme puissance de consigne.

Des essais dans différentes conditions de vol ont permis de déterminer les variations de la puissance du rotor principal en fonction des pas cyclique et collectif des pales du rotor principal ainsi que de ces conditions de vol. De fait, une puissance de consigne du rotor principal correspond à un couple de valeurs de consigne du pas cyclique longitudinal et du pas collectif qui sont fonction des conditions de vol de l'aéronef, notamment la vitesse d'avancement de l'aéronef et la densité de l'air.

De plus, il est connu, comme expliqué auparavant, qu'une variation de la portance de l'empennage horizontal permet de rendre le rotor principal piqueur ou cabreur lors d'une phase de vol stabilisée, l'assiette (ou l'incidence) de l'aéronef étant constante. Le pas cyclique longitudinal est alors modifié pour s'opposer à cet effet de l'empennage horizontal, les caractéristiques de la phase de vol stabilisée, telles que la vitesse d'avancement de l'aéronef ou son assiette par exemple, restant constantes.

En conséquence, on ajuste selon le procédé la portance de l'empennage horizontal jusqu'à ce que le pas cyclique longitudinal corresponde à cette valeur de consigne de pas cyclique longitudinal. De même, pour conserver ces conditions de vol et atteindre la puissance de consigne, le pas collectif est modifié jusqu'à la valeur de consigne du pas collectif. La portance de l'empennage horizontal est ajustée en agissant sur le moyen de manœuvre de chaque surface mobile de l'empennage horizontal.

La puissance du rotor principal est alors égale à la puissance de consigne, correspondant aux valeurs de consigne du pas cyclique longitudinal et du pas collectif.

Chaque surface mobile de l'empennage peut être constituée par une gouverne de profondeur mobile de l'empennage horizontal. De préférence, l'empennage horizontal comporte deux gouvernes.

Dans ces conditions, des essais ont permis de déterminer une configuration optimale de l'aéronef en phase de vol stabilisée pour laquelle la puissance du rotor principal est comprise entre 20 et 40% de la puissance du rotor principal en vol stationnaire.

Selon un mode de réalisation de l'invention, le procédé peut ajuster la portance de l'empennage horizontal afin que le pas cyclique longitudinal des pales du rotor principal soit égal à un pas cyclique longitudinal de consigne. Dans ce cas, on ne cherche pas à atteindre directement un niveau de puissance de l'aéronef, mais on souhaite respecter un objectif d'assiette longitudinale de l'aéronef. Les surfaces mobiles de l'empennage sont manœuvrées à basse fréquence afin que l'aéronef converge vers cet objectif d'assiette longitudinale. Ce pas cyclique longitudinal de consigne peut être fonction de la vitesse d'avancement de l'aéronef et de la densité de l'air.

Selon une variante du procédé de l'invention, on ajuste la portance de l'empennage horizontal en fonction de la valeur mesurée de la puissance nécessaire au rotor principal. Dans ce cas, deux capteurs permettent de déterminer la puissance du rotor principal, un couplemètre mesurant le couple du rotor principal, sa fréquence de rotation étant obtenue par un moyen usuel. On ajuste alors la portance de l'empennage horizontal jusqu'à ce que cette puissance mesurée du rotor principal soit égale à la puissance de consigne. Le pas cyclique longitudinal et le pas collectif sont alors ajustés pour maintenir les conditions de vol inchangées, indépendamment des valeurs de consigne du pas cyclique et du pas collectif précédemment évoquées.

Dans une autre variante de ce procédé, un moment de flexion du mât du rotor principal est mesuré directement par un capteur dédié. Ce moment permet de déterminer un moment de flexion longitudinale et un moment de flexion latérale du mât du rotor principal.

La portance de l'empennage horizontal, qui permet au rotor principal d'être piqueur ou cabreur, agit directement sur la valeur de ce moment de flexion longitudinale. De fait, le procédé permet d'ajuster la portance de l'empennage horizontal jusqu'à ce que ce moment de flexion longitudinale soit égal à un moment de flexion longitudinale de consigne. Dans ce cas, l'empennage horizontal permet donc de réaliser une phase de vol stabilisée avec un moment de flexion du mât du rotor principal correspondant à ce moment de flexion longitudinale de consigne, afin par exemple de réduire les sollicitations longitudinales du mât du rotor principal. Là encore, le pas cyclique longitudinal et le pas collectif sont ajustés pour maintenir les conditions de vol inchangées.

De même, le moment de flexion latérale du mât du rotor principal peut être ajusté en pilotant de façons différentes les volets des deux demi-ailes afin d'obtenir une différence de portance entre les deux demi-ailes. En effet, des portances différentes sur chaque demi-aile permettent de générer un moment de roulis capable de s'opposer à ce moment de flexion latérale. De fait, le procédé ajuste la portance de chaque demi-aile, jusqu'à ce qu'un moment de flexion latérale du mât du rotor principal soit égal à un moment de flexion latérale de consigne déterminé par le procédé, afin par exemple de réduire les sollicitations latérales du mât du rotor principal.

L'ajustement de portance des deux demi-ailes est obtenu en agissant sur le système de manœuvre de chaque volet. Là encore, le pas cyclique longitudinal et le pas collectif sont ajustés pour maintenir les conditions de vol inchangées.

Les moments de flexion longitudinale et latérale de consigne sont fonction des conditions de vol.

Dans un autre mode de réalisation du procédé selon l'invention, on détermine simultanément une valeur du pas cyclique et une valeur du pas collectif des pales du rotor principal ainsi que la portance de l'empennage horizontal et la portance des demi-ailes pour une phase de vol stabilisée.

Il est connu que le contrôle des pas collectif et cyclique ainsi que le pas de chaque hélice propulsive permettent d'assurer une phase de vol stabilisée.

De fait, on détermine une valeur du pas collectif des pales du rotor principal afin que l'incidence de l'aéronef soit égale à une incidence de consigne afin par exemple que l'altitude de l'aéronef soit constante et égale à une altitude de consigne.

De plus, le pas cyclique des pales du rotor principal peut être décomposé en un pas cyclique longitudinal et un pas cyclique latéral. On détermine alors une valeur du pas cyclique longitudinal des pales du rotor principal afin que l'assiette longitudinale de l'aéronef soit égale à une assiette longitudinale de consigne,

De même, on détermine une valeur du pas cyclique latéral des pales du rotor principal afin qu'une assiette latérale de l'aéronef soit égale à une assiette latérale de consigne,

Lors d'une phase de vol stabilisée, la vitesse d'avancement de l'aéronef est constante. Dans ce cas, le pas de l'hélice propulsive est piloté par exemple par une boucle de régulation en parallèle et indépendamment du procédé selon l'invention. La vitesse d'avancement peut également être pilotée manuellement, le procédé selon l'invention s'adaptant alors aux modifications de cette vitesse d'avancement. Cette adaptation ne perturbe pas le pilotage de l'aéronef, son évolution dynamique étant lente, par rapport à un système rapide qui pourrait être générateur de phénomènes de pompage.

Cependant, la stabilisation complète ne l'aéronef n'est pas assurée de façon optimum. En effet, la portance de l'aéronef est répartie entre d'une part le rotor principal et d'autre part les deux demi-ailes.

On détermine alors la portance des demi-ailes afin qu'elle corresponde au premier pourcentage prédéterminé de la portance totale de l'aéronef et la portance de l'empennage horizontal afin que la puissance du rotor principal soit égale à une puissance de consigne. Une répartition optimisée de la portance peut ainsi être obtenue afin de réduire la trainée aérodynamique du rotor principal, et par suite d'augmenter sa finesse aérodynamique.

Enfin et pour prendre en compte la dissymétrie d'incidence entre les deux demi-ailes générée par le rotor principal, on détermine une différence de portance entre chaque demi-aile qui permet de compenser cette dissymétrie d'incidence.

Dans un mode de réalisation de l'invention, on affiche sur un moyen de visualisation de l'aéronef des informations relatives à la portance du rotor principal et à une portance de consigne du rotor principal, au moins une information relative aux volets des deux demi-ailes et au moins une information relative à l'empennage horizontal.

En effet, afin d'aider le pilote à optimiser le fonctionnement de l'aéronef, on indique sur ce moyen de visualisation les informations lui permettant d'ajuster de façon optimale les portances des demi-ailes et de l'empennage horizontal.

Pour cela, on affiche la portance actuelle du rotor principal, obtenue par exemple par des mesures d'efforts sur les barres de soutien de la boîte de transmission principale de puissance, ainsi qu'une portance de consigne qui correspond en fait au second pourcentage prédéterminé de la portance totale de l'aéronef.

De plus, pour informer le pilote du niveau de portance des demi-ailes, on affiche une position moyenne des volets des deux demi-ailes, ainsi que la différence de positions entre ces volets. La position moyenne des volets correspond en fait à la position des volets, identique pour chaque demi-aile, permettant d'obtenir la portance des demi-ailes. La différence de positions entre ces volets correspond à la différence de portance des deux demi-ailes, permettant de compenser la dissymétrie d'incidence générée par le rotor principal entre les deux demi-ailes.

Enfin, on affiche une position de la surface mobile (gouverne de profondeur) de l'empennage horizontal correspondant à la portance de l'empennage.

Un aéronef à voilure tournante à vitesse d'avancement élevée en phase de vol stabilisée apte à mettre en œuvre le procédé de commande précédemment évoqué est décrit ci-dessous.

Un tel aéronef comporte un fuselage, au moins un rotor principal muni d'une pluralité de pales, au moins une hélice propulsive à pas variable, au moins une surface sustentatrice et au moins une motorisation entraînant en rotation le rotor principal et chaque hélice propulsive.

Cette surface sustentatrice comporte au moins deux demi-ailes positionnées de part et d'autre du fuselage et au moins un moyen aérodynamique destiné à modifier la portance des demi-ailes. De plus, cette surface sustentatrice comporte au moins un empennage horizontal positionné à une extrémité de l'aéronef et comportant au moins une surface mobile ainsi qu'au moins un moyen de manœuvre de cette surface mobile.

Le moyen aérodynamique de l'aéronef permet d'ajuster la portance des deux demi-ailes afin que cette portance des deux demi-ailes soit égale au premier pourcentage prédéterminé de la portance totale de l'aéronef lors d'une phase de vol stabilisée.

Le moyen de manœuvre de la surface mobile de l'empennage permet de manœuvrer cette surface mobile ajustant ainsi la portance de l'empennage horizontal afin que la puissance du rotor principal soit égale à une puissance de consigne lors d'une phase de vol stabilisée. Cette puissance de consigne correspond à une zone de fonctionnement optimum, par exemple pour minimiser la puissance du rotor principal, et par suite la consommation de carburant.

Le moyen aérodynamique de l'aéronef comporte au moins un volet mobile sur chaque demi-aile et au moins un système de manœuvre de chaque volet. Chaque système de manœuvre permet de manœuvrer les volets afin d'ajuster la portance de chaque demi-aile.

Dans un mode de réalisation de l'invention, l'aéronef comporte un moyen de visualisation affichant des informations permettant au pilote d'optimiser le fonctionnement de l'aéronef.

En effet, ce moyen de visualisation affiche la portance actuelle du rotor principal, obtenue par exemple par des mesures d'efforts sur les barres de soutien de la boîte de transmission principale de puissance, ainsi qu'une portance de consigne qui correspond en fait au second pourcentage prédéterminé de la portance totale de l'aéronef.

De plus, pour informer le pilote du niveau de portance des demi-ailes, ce moyen de visualisation affiche une position moyenne des volets des deux demi-ailes, ainsi qu'une différence de positions entre ces volets, correspondant à la différence de portance des deux demi-ailes, permettant de compenser la dissymétrie d'incidence générée par le rotor principal entre les deux demi-ailes.

Ensuite, ce moyen de visualisation affiche une position de la surface mobile de l'empennage horizontal correspondant à la portance de l'empennage.

Enfin, ce moyen de visualisation affiche un mode de fonctionnement activé au niveau des volets et de l'empennage horizontal. En effet, le système de manœuvre, qui assure la manœuvre des volets de chaque demi-aile, peut être piloté par un pilote automatique, présent sur l'aéronef ou bien par le pilote. Ce système de manœuvre peut également être défaillant et par suite inopérant. Ce moyen de visualisation permet donc d'indiquer quel mode de pilotage est activé ou bien si ce système de manœuvre est inopérant. Il en est de même pour le moyen de manœuvre de l'empennage horizontal.

L'invention et ses avantages apparaîtront avec plus de détails dans le cadre de la description qui suit avec des exemples de réalisation donnés à titre illustratif en référence aux figures annexées qui représentent :

- les figures 1 et 2, deux modes de réalisation du procédé selon l'invention,

- les figures 3 à 5, un aéronef apte à mettre en œuvre le procédé selon l'invention,

- la figure 6, un moyen de visualisation de cet aéronef.

Les éléments présents dans plusieurs figures distinctes sont affectés d'une seule et même référence.

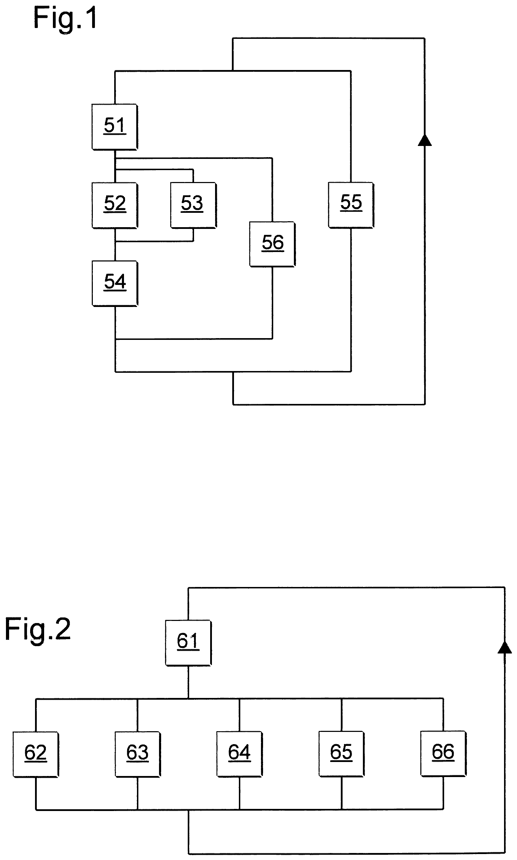

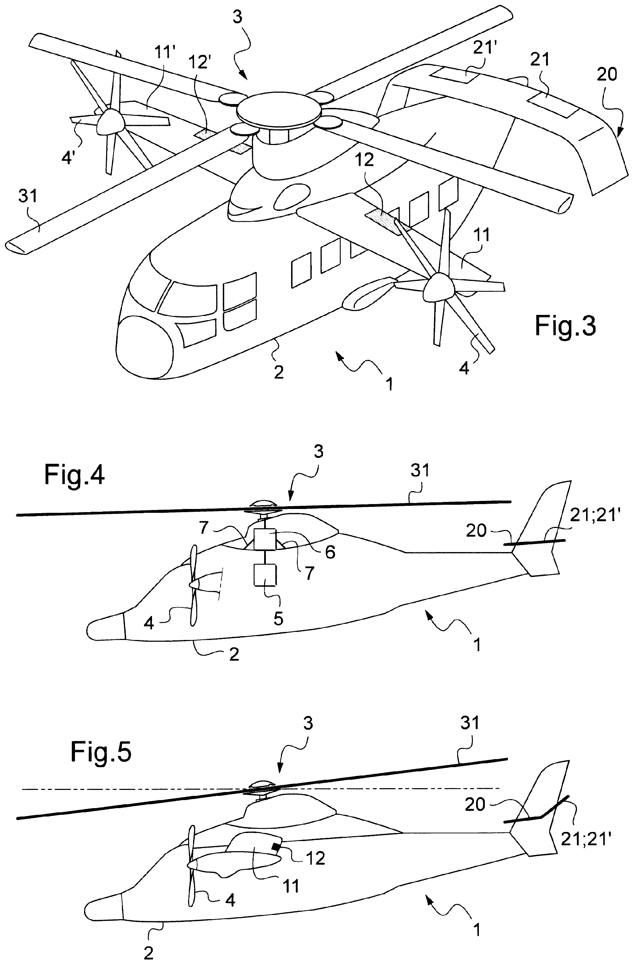

Les figures 1 et 2 décrivent deux modes de réalisation d'un procédé de commande d'un aéronef 1 à voilure tournante à vitesse d'avancement élevée qui se composent de plusieurs étapes. Les figures 3 à 5 décrivent un aéronef 1 à voilure tournante à vitesse d'avancement élevée apte à mettre en œuvre le procédé de commande selon l'invention.

Ce procédé permet d'ajuster la portance des demi-ailes 11, 11' et de l'empennage horizontal 20 lors d'une phase de vol stabilisée de l'aéronef 1. Lors d'une telle phase de vol stabilisée, les principaux paramètres de vol de l'aéronef 1 sont constants, notamment sa trajectoire et son incidence ainsi que sa vitesse d'avancement. De plus, ce procédé n'est activé sur l'aéronef 1 que lorsque l'angle de roulis de l'aéronef 1 est inférieur à 10° et la vitesse d'avancement de l'aéronef 1 est supérieure à 50 kts (50 nœuds), aucune action sur les commandes de l'aéronef 1 n'étant exercée par un pilote.

Un tel aéronef 1, représenté sur les figures 3 et 4, comporte un fuselage 2, un rotor principal 3 muni d'une pluralité de pales 31, deux hélices propulsives 4, 4' à pas variable, deux demi-ailes 11, 11' positionnées de part et d'autre du fuselage 2, un empennage horizontal 20 positionné à l'extrémité arrière de l'aéronef 1 et une motorisation 5, entraînant en rotation le rotor principal 3 et les hélices propulsives 4, 4'. La motorisation 5 est notamment reliée au rotor principal 3 par une boite de transmission principale de puissance 6, qui est fixée au fuselage 2 de l'aéronef 1 par une pluralité de barres de soutien 7.

Les demi-ailes 11, 11' comportent un moyen aérodynamique destiné à ajuster la portance de chaque demi-aile. Ce moyen aérodynamique comporte un volet 12, 12' sur chaque demi-aile 11, 11' ainsi qu'un système de manœuvre de chaque volet 12, 12'. L'empennage horizontal 20 comporte deux surfaces mobiles 21, 21', qui peuvent être manœuvrées par un moyen de manœuvre des surfaces mobiles 21, 21'. La manœuvre de chaque volet 12, 12' et des surfaces mobiles 21, 21' provoquent respectivement un ajustement de la portance de chaque demi-aile 11, 11' et de l'empennage horizontal 20.

Le procédé de commande décrit sur la figure 1 comporte six étapes.

L'étape 51 consiste à déterminer la portance totale de l'aéronef 1. Cette portance totale s'oppose exactement au poids de l'aéronef 1 afin d'assurer sa sustentation, l'aéronef 1 restant à altitude constante. Ce poids est défini à partir de la masse de l'aéronef 1 et de la masse de carburant consommé, qui est déterminée, par exemple, par une mesure de la consommation de carburant de la motorisation 5 par l'intermédiaire de débitmètres installés sur cette motorisation.

Une étape 52 consiste à déterminer la portance des deux demi-ailes par l'intermédiaire de la formule :

$$Z_{aile} = 1/2 . \rho . TAS^2 . S . \overline{C_Z} \text{ ,}$$

$\rho$ étant la masse volumique de l'air dans les conditions de vol, $TAS$ la vitesse d'avancement de l'aéronef 1, $S$ la surface des deux demi-ailes, $C_Z$ le coefficient de portance moyenne des demi-ailes 11, 11' pour une incidence $\alpha = \alpha_{fus} + \alpha_{Interaction}$, $\alpha_{fus}$ l'incidence de l'aéronef 1 et $\alpha_{Interaction}$ une correction d'incidence déterminée par exemple par des essais en vol.

On connait également la formule donnant l'incidence de l'aéronef : $\alpha_{fus} = \theta - Arcsin (V_z/TAS)$ où $\theta$ est l'assiette longitudinale de l'aéronef 1 et $V_z$ la vitesse verticale de l'air par rapport à l'aéonef.

Les valeurs de cette assiette longitudinale et des vitesses d'avancement de l'aéronef 1 et verticale de l'air sont obtenues par l'intermédiaire de capteurs présents dans l'aéronef 1. De même, la masse volumique de l'air correspond aux conditions de l'atmosphère standard à l'altitude de vol.

Selon un mode de réalisation préféré de l'étape 52, une étape 52' consiste à déterminer la portance du rotor principal 3 en mesurant des efforts présents dans les barres de soutien 7, ces efforts étant proportionnels à la portance du rotor principal 3.

Simultanément à l'étape 52, une étape 53 consiste à déterminer une différence de portance entre chaque demi-aile 11, 11' afin de compenser des effets du rotor principal 3 sur chaque demi-aile 11, 11'. En effet, les flux d'air générés par la rotation du rotor principal 3 affectent différemment les deux demi-ailes 11, 11' placés de part et d'autre du fuselage 2 de l'aéronef 1 et créent ainsi une dissymétrie d'incidence entre les deux demi-ailes 11, 11'. De fait, un écart de portance apparait entre chaque demi-aile 11, 11' et entraîne une mise en roulis de l'aéronef 1.

L'étape 53 consiste à déterminer la différence de portance entre chaque demi-aile 11, 11' pour compenser cet écart de portance et éviter ainsi la mise en roulis de l'aéronef 1.

Au cours d'une étape 54, on ajuste la portance des demi-ailes 11, 11' afin qu'elle soit égale à un premier pourcentage prédéterminé de la portance totale de l'aéronef 1. Ce premier pourcentage prédéterminé correspond à une bonne répartition de portance entre le rotor principal 3 et les demi-ailes 11, 11', permettant un bon fonctionnement d'un tel aéronef 1. De préférence, ce premier pourcentage prédéterminé est égale à 40%.

Cependant, dans le cas de l'étape 52', la portance totale de l'aéronef 1 étant égale à la somme de la portance du rotor principal 3 et de la portance de deux demi-ailes 11, 11' on en déduit que la portance du rotor principal 3 doit être égale à un second pourcentage prédéterminé de la portance totale de l'aéronef 1, la somme du premier pourcentage prédéterminé et du second pourcentage prédéterminé étant égale à 100%. Par exemple, si le premier pourcentage prédéterminé est 40%, le second pourcentage prédéterminé est 60%. Au cours de cette étape 54, on ajuste donc la portance des demi-ailes 11, 11' afin que la portance du rotor principal 3, déterminée lors de l'étape 51, soit égale à un second pourcentage prédéterminé de la portance totale de l'aéronef 1.

Simultanément aux étapes 51 à 54, une étape 55 consiste à ajuster la portance de l'empennage horizontal 20 afin qu'une puissance du rotor principal 3 soit égale à une puissance de consigne, cette puissance de consigne étant, de préférence, comprise entre 20 et 40% de la puissance du rotor principal 3 lors d'un vol stationnaire de l'aéronef 1.

En effet, comme représentée sur la figure 5, une variation de la portance de l'empennage 20, obtenue en déplaçant les surfaces mobiles 21, 21', modifie l'inclinaison du rotor principal 3, l'aéronef 1 étant en phase de vol stabilisée. Suivant cette inclinaison, le rotor principal 3 peut être piqueur, comme représenté sur la figure 5, ou cabreur, au sens du moment de tangage, les pas collectif et cyclique des pales du rotor principal 3 étant modifiés afin de maintenir les paramètres de la phase de vol stabilisée constants. Par suite, un ajustement de la portance de l'empennage 20 entraîne une modification de la puissance qui est consommée par le rotor principal 3. Il est ainsi possible d'ajuster la portance de l'empennage 20 afin que la puissance du rotor principal 3 soit égale à une puissance de consigne. La puissance du rotor principal 3 peut par exemple être mesurée par l'intermédiaire d'un couplemètre et d'un moyen usuel fournissant la fréquence de rotation du rotor principal 3.

Selon une variante de cette étape 55, la puissance de consigne correspond à un couple de valeurs de consigne du pas cyclique et du pas collectif. La portance de l'empennage 20 est alors ajustée afin que le pas cyclique et le pas collectif des pales du rotor principal 3 de l'aéronef 1 soient égaux à ce couple de valeurs de consigne.

Selon une autre variante de cette étape 55, on ajuste la portance de l'empennage horizontal 20 afin qu'un moment de flexion longitudinale d'un mât du rotor principal 3 soit égal à un moment de flexion longitudinale de consigne. En effet, il est possible de mesurer le moment de flexion du mât du rotor principal 3, notamment dans le cas d'un aéronef à moyeu rigide. Ensuite, une modification de la portance de l'empennage 20 modifie l'inclinaison du rotor principal 3, et par suite agit sur la flexion du mât de ce rotor principal 3. De fait, il est possible, en ajustant la portance de l'empennage 20, d'amener le moment de flexion longitudinale du mât du rotor égal à un moment de flexion longitudinale de consigne afin que ce moment de flexion soit faible voire nul par exemple, et limiter ainsi les sollicitations de ce mât.

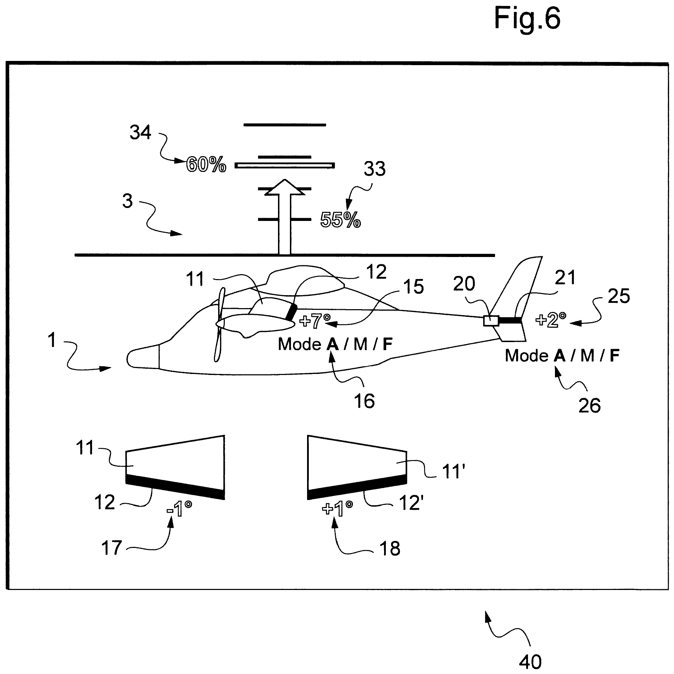

Enfin, une étape 56, simultanée aux étapes 52 à 54, consiste à afficher sur un moyen de visualisation 40, représenté sur la figure 6, des informations 33 et 34 relatives à la portance du rotor principal 3 et à une portance de consigne du rotor principal 3, au moins une information 15, 16, 17 et 18 relative aux volets 12, 12' des deux demi-ailes 11, 11' et au moins une information 25 et 26 relative à l'empennage horizontal 20. Ces informations sont connues, la portance du rotor principal 3 étant déterminée à partir de mesures des efforts dans les barres de soutien 7 de la boîte de transmission principale de puissance 6. De plus, la portance de consigne du rotor principal 3 est égale à un second pourcentage prédéterminé de la portance totale de l'aéronef 1.

Ce moyen de visualisation 40 affiche également un mode de fonctionnement 16 activé au niveau des volets 12, 12' et de l'empennage horizontal 20. En effet, le système de manœuvre, qui assure la manœuvre des volets 12, 12', peut être piloté par un pilote automatique, présent sur l'aéronef ou bien manuellement par le pilote. Ce système de manœuvre peut également être défaillant et par suite inopérant. Le moyen de visualisation 40 affiche alors, pour les volets 12, 12', une information 16 ou apparaît « Mode A » lorsque le pilote automatique est engagé, « Mode M » lorsque ces volets 12, 12' sont pilotés manuellement et « Mode F » lorsque le système de manœuvre est défaillant. Il en est de même pour le moyen de manœuvre de l'empennage horizontal 20.

Ces informations permettent ainsi au pilote d'optimiser le fonctionnement de l'aéronef 1.

Le procédé selon l'invention représenté sur la figure 2 comporte sept étapes. Une étape 61 consiste à déterminer la portance totale de l'aéronef 1.

On détermine ensuite simultanément une valeur du pas cyclique et une valeur du pas collectif des pales du rotor principal 3 ainsi que la portance de l'empennage horizontal 20 et la portance des demi-ailes 11, 11' pour une phase de vol stabilisée.

Une étape 62 consiste à déterminer une valeur du pas collectif des pales du rotor principal 3 afin que l'incidence de l'aéronef 1 soit égale à une incidence de consigne. Une étape 63 consiste à déterminer une valeur du pas cyclique longitudinal des pales du rotor principal 3 afin que l'assiette longitudinale de l'aéronef soit égale à une assiette longitudinale de consigne.

Une étape 64 consiste à déterminer une valeur du pas cyclique latéral des pales du rotor principal 3 afin qu'une assiette latérale de l'aéronef 1 soit égale à une assiette latérale de consigne.

Une étape 65 consiste à déterminer la portance des demi-ailes 11, 11' afin qu'elle corresponde au premier pourcentage prédéterminé de la portance totale de l'aéronef 1 et la portance de l'empennage horizontal 20 afin que la puissance du rotor principal 3 soit égale à une puissance de consigne.

Une étape 66 consiste à déterminer une différence de portance entre chaque demi-aile 11, 11', afin de prendre en compte la dissymétrie d'incidence entre les deux demi-ailes 11, 11' générée par le rotor principal 3.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles.

Dans un exemple qui ne fait pas partie de l'invention, l'ajustement de la portance des deux demi-ailes 11, 11', réalisé dans le mode de réalisation décrit par le moyen aérodynamique, qui comporte des volets 12, 12' et des systèmes de manœuvre, peut être obtenu par une rotation dans leur intégralité de demi-ailes ne possédant pas de volet. Cet ajustement peut également être obtenu par des demi-ailes sans volet, fixes par rapport au fuselage 2 de l'aéronef 1, et par un changement de l'assiette de l'aéronef 1. Ces modes d'ajustement ne font pas parties de l'invention.

De même, l'ajustement de la portance de l'empennage horizontal 20, réalisé dans le mode de réalisation décrit par deux surfaces mobiles 21, 21' et un moyen de manœuvre, peut être constitué par une mobilité de l'empennage horizontal 20 dans son intégralité.

**Revendications**

1. Procédé de commande d'un aéronef (1) à voilure tournante à vitesse d'avancement élevée, comportant

   - un fuselage (2),
   - au moins un rotor principal (3) muni d'une pluralité de pales (31),
   - au moins une hélice propulsive (4) à pas variable,
   - au moins deux demi-ailes (11,11') positionnées de part et d'autre dudit fuselage (2),
   - un moyen aérodynamique dudit aéronef (1) comportant au moins un volet (12,12') mobile sur chaque demi-aile (11,11') et au moins un système de manœuvre desdits volets (12,12'),
   - au moins un empennage horizontal (20) positionné à une extrémité dudit aéronef (1), ledit empennage horizontal (20) comportant au moins une surface mobile (21,21'), et
   - au moins une motorisation (5), entraînant en rotation ledit rotor principal (3) et chaque hélice propulsive (4),
   au cours duquel,
   - on détermine la portance totale de l'aéronef (1) en considérant que ladite portance totale s'oppose au poids dudit aéronef (1),
   - on détermine une différence de portance entre lesdites deux demi-ailes (11,11') nécessaire à compenser des effets dudit rotor principal (3) sur lesdites demi-ailes (11,11'), et
   - lors d'une phase de vol stabilisée, on ajuste la portance de chaque demi-aile (11,11') en agissant sur ledit système de manœuvre desdits volets (12,12') afin que :

○ la somme de ladite portance desdites demi-ailes (11,11') soit égale à un premier pourcentage prédéterminé de ladite portance totale dudit aéronef (1) lors d'une phase de vol stabilisée, et
○ ladite différence de portance entre lesdites deux demi-ailes (11,11') soit obtenue.

2. Procédé selon la revendication 1, **caractérisé en ce que** ladite portance desdites demi-ailes (11,11') est égale à 40% de ladite portance totale dudit aéronef (1).

3. Procédé selon l'une quelconque des revendications 1 à 2, **caractérisé en ce que** l'on détermine ledit poids dudit aéronef (1) à partir de la consommation en carburant de ladite motorisation (5).

4. Procédé selon l'une quelconque des revendications 1 à 3, **caractérisé en ce que** l'on détermine ladite portance desdites demi-ailes (11,11') à l'aide de la relation suivante : $z_{aile} = 1/2.\rho.TAS^2.S.C_Z$, où « $Z_{aile}$ » représente ladite portance desdites deux demi-ailes (11,11'), « $\rho$ » représente la masse volumique de l'air dans les conditions de vol, « TAS » représente la vitesse d'avancement dudit aéronef (1), « S » représente la surface totale des deux demi-ailes (11,11'), « $C_Z$ » représente le coefficient de portance moyenne desdites deux demi-ailes (11,11'), qui est fonction de l'angle d'incidence aérodynamique $\alpha$ desdites demi-ailes (11,11') avec $\alpha = \alpha_{fus} + \alpha_{Interaction}$, « $\alpha_{fus}$ » représente l'angle d'incidence aérodynamique dudit aéronef (1) et est déterminée par : $\alpha_{fus} = \theta - Arcsin(V_Z/TAS)$, « $\alpha_{Interaction}$ » représente une correction d'incidence desdites demi-ailes (11,11'), « Vz » représente la vitesse verticale de l'air par rapport audit aéronef (1), « $\theta$ » représente l'assiette longitudinale dudit aéronef (1), et «. » représente le signe de la multiplication, puis on ajuste ladite portance desdites demi-ailes (11,11') afin que ladite portance desdites demi-ailes (11,11') soit égale audit premier pourcentage prédéterminé de ladite portance totale de l'aéronef (1).

5. Procédé selon l'une quelconque des revendications 1 à 3, **caractérisé en ce que**, ledit rotor principal (3) étant entraîné par une boîte de transmission principale de puissance (6) reliée audit fuselage (2) par une pluralité de barres de soutien (7), on mesure des efforts sur lesdites barres de soutien (7), on détermine la portance dudit rotor principal (3) à partir des mesures desdits efforts sur lesdites barres de soutien (7), ladite portance desdites demi-ailes (11,11') étant égale à une différence de ladite portance totale de l'aéronef (1) par ladite portance dudit rotor principal (3).

6. Procédé selon l'une quelconque des revendications 1 à 5, **caractérisé en ce que** l'on ajuste ladite portance desdites demi-ailes (11,11') lorsque :

- l'angle de roulis dudit aéronef (1) est inférieur à 10°,
- la vitesse d'avancement TAS dudit aéronef (1) est supérieure à 50 kts, et
- aucune action sur les commandes dudit aéronef (1) n'est détectée.

7. Procédé selon l'une quelconque des revendications 1 à 6, **caractérisé en ce que** l'on détermine un pas cyclique latéral de consigne afin que ladite différence de portance entre lesdites deux demi-ailes (11,11') permette qu'un pas cyclique latéral desdites pales dudit rotor principal (3) soit égal audit pas cyclique latéral de consigne.

8. Procédé selon l'une quelconque des revendications 1 à 6, **caractérisé en ce que** l'on détermine un moment de flexion latérale de consigne afin que ladite différence de portance entre lesdites deux demi-ailes (11,11') permette qu'un moment de flexion latérale d'un mât dudit rotor principal (3) soit égal audit moment de flexion latérale de consigne.

9. Procédé selon l'une quelconque des revendications 1 à 8, **caractérisé en ce que** l'on ajuste la portance dudit empennage horizontal (20), en agissant sur un moyen de manœuvre de chaque surface mobile (21,21') afin qu'un pas cyclique longitudinal desdites pales dudit rotor principal (3) soit égal à un pas cyclique longitudinal de consigne.

10. Procédé selon l'une quelconque des revendications 1 à 8, **caractérisé en ce que** l'on ajuste la portance dudit empennage horizontal (20), en agissant sur un moyen de manœuvre de chaque surface mobile (21,21') afin qu'une puissance dudit rotor principal (3) soit égale à une puissance de consigne lors de ladite phase de vol stabilisée.

11. Procédé selon la revendication 10, **caractérisé en ce que** ladite puissance de consigne dudit rotor principal (3) en phase de vol stabilisée correspond à une valeur comprise entre 20 et 40% de la puissance dudit rotor principal (3) lors d'un vol stationnaire dudit aéronef (1).

**12.** Procédé selon l'une quelconque des revendications 1 à 8,
**caractérisé en ce que** l'on ajuste la portance dudit empennage horizontal (20), en agissant sur un moyen de manœuvre de chaque surface mobile (21,21') afin qu'un moment de flexion longitudinale d'un mât dudit rotor principal (3) soit égal à un moment de flexion longitudinale de consigne lors de ladite phase de vol stabilisée.

**13.** Procédé selon l'une quelconque des revendications 1 à 12,
**caractérisé en ce que** l'on détermine simultanément :

- le pas cyclique longitudinal desdites pales dudit rotor principal (3) afin qu'une assiette longitudinale dudit aéronef (1) soit égale à une assiette longitudinale de consigne,
- le pas collectif desdites pales dudit rotor principal (3) afin que l'altitude dudit aéronef (1) soit égale à une altitude de consigne ou bien que l'incidence dudit aéronef (1) soit égale à une incidence de consigne,
- le pas cyclique latéral desdites pales dudit rotor principal (3) afin qu'une assiette latérale dudit aéronef (1) soit égale à une assiette latérale de consigne,
- la portance dudit empennage horizontal (20) afin qu'une puissance dudit rotor principal (3) soit égale à une puissance objective,
- la portance desdites demi-ailes (11,11') correspondante audit premier pourcentage prédéterminé de ladite portance totale dudit aéronef (1),
- la différence de portance entre chaque demi-aile (11,11') afin de compenser la dissymétrie d'incidence générée par ledit rotor principal (3) entre lesdites demi-ailes (11,11').

**14.** Procédé selon l'une quelconque des revendications 1 à 13,
**caractérisé en ce que** l'on affiche sur un moyen de visualisation (40) dudit aéronef (1) des informations relatives à ladite portance dudit rotor principal (3) et à ladite portance de consigne dudit rotor principal (3), au moins une information relative auxdits volets (12,12') et au moins une information relative audit empennage horizontal (20).

**Patentansprüche**

**1.** Verfahren zur Steuerung eines Hochgeschwindigkeits-Drehflügelluftfahrzeugs (1) mit

- einem Rumpf (2),
- mindestens einem Hauptrotor (3) mit einer Mehrzahl von Blättern (31),
- mindestens einem Propeller (4) mit verstellbarem Anstellwinkel,
- mindestens zwei Halbflügeln (11, 11'), die beiderseits des Rumpfes (2) angeordnet sind,
- einem aerodynamischen Mittel des Luftfahrzeugs (1), das mindestens eine bewegliche Klappe (12, 12') an jedem Halbflügel (11, 11') und mindestens ein System zum Betätigen der Klappen (12, 12') umfasst,
- mindestens einem Höhenleitwerk (20), das an einem Ende des Luftfahrzeugs (1) angeordnet ist, wobei das Höhenleitwerk (20) mindestens eine bewegliche Fläche (21, 21') aufweist, und
- mindestens einem Antrieb (5), der den Hauptrotor (3) und jeden Antriebspropeller (4) in Drehung versetzt,
bei dem
- der Gesamtauftrieb des Luftfahrzeugs (1) bestimmt wird unter Berücksichtigung dessen, dass der Gesamtauftrieb dem Gewicht des Luftfahrzeugs (1) entgegengesetzt ist,
- eine Auftriebsdifferenz zwischen den beiden Halbflügeln (11, 11') bestimmt wird, die notwendig ist, um Effekte des Hauptrotors (3) auf die Halbflügel (11, 11') zu kompensieren, und
- während einer stabilisierten Flugphase der Auftrieb jedes Halbflügels (11, 11') durch Einwirken auf das System zum Betätigen der Klappen (12, 12') so eingestellt wird, dass :

○ die Summe des Auftriebs der Halbflügel (11, 11') gleich einem ersten vorgegebenen Prozentsatz des Gesamtauftriebs des Luftfahrzeugs (1) in einer stabilisierten Flugphase ist, und
○ die Auftriebsdifferenz zwischen den beiden Halbflügeln (11, 11') erhalten wird.

**2.** Verfahren nach Anspruch 1,
**dadurch gekennzeichnet, dass** der Auftrieb der Halbflügel (11, 11') gleich 40% des Gesamtauftriebs des Luftfahrzeugs (1) ist.

**3.** Verfahren nach einem der Ansprüche 1 bis 2,
**dadurch gekennzeichnet, dass** das Gewicht des Luftfahrzeugs (1) anhand des Kraftstoffverbrauchs des Antriebs (5) bestimmt wird.

**4.** Verfahren nach einem der Ansprüche 1 bis 3,
**dadurch gekennzeichnet, dass** der Auftrieb der Halbflügel (11, 11') mittels der folgenden Beziehung bestimmt wird

$$Z_{aile} = 1/2 . \rho . TAS^2 . S . \overline{C_z} \, ,$$

wobei

"$Z_{aile}$" für den Auftrieb der beiden Halbflügel (11, 11') steht,

"$\rho$" für die Dichte der Luft unter den Flugbedingungen steht,

"$TAS$" für die Reisegeschwindigkeit des Luftfahrzeugs (1) steht,

"$S$" für die Gesamtoberfläche der beiden Halbflügel (11, 11') steht,

"$C_z$" für den mittleren Auftriebskoeffizienten der beiden Halbflügel (11, 11') steht, der eine Funktion des aerodynamischen Anstellwinkels $\alpha$ der Halbflügel (11, 11') mit $\alpha = \alpha_{fus} + \alpha_{Interaction}$ ist; "$\alpha_{fus}$" für den aerodynamischen Anstellwinkel des Luftfahrzeugs (1) steht und bestimmt ist durch: $\alpha_{fus} = \theta - Arcsin\,(Vz/TAS)$, "$\alpha_{interaction}$" für eine Anstellkorrektur der Halbflügel (11,11') steht, "$Vz$" für die vertikale Geschwindigkeit der Luft in Bezug auf das Luftfahrzeug (1) steht, "$\theta$" für die Nickstellung des Luftfahrzeugs (1) steht, und

"." für das Multiplikationszeichen steht, dann der Auftrieb der Halbflügel (11, 11') so eingestellt wird, dass der Auftrieb der Halbflügel (11, 11') gleich dem ersten vorgegebenen Prozentsatz des Gesamtauftriebs des Luftfahrzeugs (1) ist.

5. Verfahren nach einem der Ansprüche 1 bis 3, **dadurch gekennzeichnet, dass** der Hauptrotor (3) von einem Hauptgetriebe (6) angetrieben wird, das mit dem Rumpf (2) durch eine Mehrzahl von Trägerstangen (7) verbunden ist, dass Kräfte auf die Trägerstangen (7) gemessen werden, der Auftrieb des Hauptrotors (3) aus den Messungen der Kräfte an den Trägerstangen (7) bestimmt wird, wobei der Auftrieb der Halbflügel (11, 11') gleich einer Differenz zwischen dem Gesamtauftrieb des Luftfahrzeugs (1) und dem Auftrieb des Hauptrotors (3) ist.

6. Verfahren nach einem der Ansprüche 1 bis 5, **dadurch gekennzeichnet, dass** der Auftrieb der Halbflügel (11, 11') eingestellt wird, wenn:

   - der Rollwinkel des Luftfahrzeugs (1) weniger als 10° beträgt,
   - die Reisegeschwindigkeit $TAS$ des Luftfahrzeugs (1) größer als 50 kn ist, und
   - keine Betätigung an den Bedienelementen des Luftfahrzeugs (1) erkannt wird.

7. Verfahren nach einem der Ansprüche 1 bis 6, **dadurch gekennzeichnet, dass** ein seitlicher zyklischer Soll-Anstellwinkel so bestimmt wird, dass der Auftriebsunterschied zwischen den beiden Halbflügeln (11, 11') es ermöglicht, einen seitlichen zyklischen Anstellwinkel der Blätter des Hauptrotors (3) gleich dem seitlichen zyklischen Soll-Anstellwinkel zu machen.

8. Verfahren nach einem der Ansprüche 1 bis 6, **dadurch gekennzeichnet, dass** ein seitliches Soll-Biegemoment so bestimmt wird, dass der Auftriebsunterschied zwischen den beiden Halbflügeln (11, 11') es ermöglicht, ein seitliches Biegemoment eines Mastes des Hauptrotors (3) gleich dem seitlichen Soll-Biegemoment zu machen.

9. Verfahren nach einem der Ansprüche 1 bis 8, **dadurch gekennzeichnet, dass** der Auftrieb des Höhenleitwerks (20) durch Einwirken auf ein Stellmittel jeder beweglichen Fläche (21, 21') so eingestellt wird, dass eine zyklische Längsanstellung der Blätter des Hauptrotors (3) gleich einer zyklischen Soll-Längsanstellung ist.

10. Verfahren nach einem der Ansprüche 1 bis 8, **dadurch gekennzeichnet, dass** während der stabilisierten Flugphase der Auftrieb des Höhenleitwerks (20) durch Einwirken auf ein Stellmittel jeder beweglichen Fläche (21, 21') so eingestellt wird, dass eine Leistung des Hauptrotors (3) gleich einer Sollleistung ist.

11. Verfahren nach Anspruch 10, **dadurch gekennzeichnet, dass** die Sollleistung des Hauptrotors (3) in der stabilisierten Flugphase einem Wert zwischen 20 und 40% der Leistung des Hauptrotors (3) in einem Schwebeflug des Luftfahrzeugs (1) entspricht.

12. Verfahren nach einem der Ansprüche 1 bis 8, **dadurch gekennzeichnet, dass** während der stabilisierten Flugphase der Auftrieb des Höhenleitwerks (20) durch Einwirken auf ein Stellmittel jeder beweglichen Fläche (21, 21') so eingestellt wird, dass ein Längsbiegemoment eines Mastes des Hauptrotors (3) gleich einem Soll-Längsbiegemoment ist.

13. Verfahren nach einem der Ansprüche 1 bis 12, **dadurch gekennzeichnet, dass** gleichzeitig bestimmt wird:

   - die zyklische Längsanstellung der Blätter des Hauptrotors (3), so dass eine Nickstellung des Luftfahrzeugs (1) gleich einer Soll-Nickstellung ist,
   - der kollektive Anstellwinkel der Blätter des Hauptrotors (3), so dass die Höhe des Luftfahrzeugs (1) gleich einer Soll-Höhe ist oder der Anstellwinkel des Luftfahrzeugs (1) gleich einem Soll-Anstellwinkel ist,
   - der seitliche zyklische Anstellwinkel der Blätter des Hauptrotors (3), so dass eine Rollstellung des Luftfahrzeugs (1) gleich einer Soll-Rollstellung ist,
   - der Auftrieb des Höhenleitwerks (20), so dass eine Leistung des Hauptrotors (3) gleich einer Zielleistung ist,
- den Auftrieb der Halbflügel (11, 11') entsprechend dem ersten vorgegebenen Prozentsatz des Gesamtauftriebs des Luftfahrzeugs (1),
- die Auftriebsdifferenz zwischen jedem Halbflügel (11, 11'), um die durch den Hauptrotor (3) erzeugte Anstellasymmetrie zwischen den Halbflügeln (11, 11') auszugleichen.

14. Verfahren nach einem der Ansprüche 1 bis 13, **dadurch gekennzeichnet, dass** Informationen, die sich auf den Auftrieb des Hauptrotors (3) und auf den Sollauftrieb des Hauptrotors (3) beziehen, mindestens eine Information, die sich auf die Klappen (12, 12') bezieht, und mindestens eine Information, die sich auf das Höhenleitwerk (20) bezieht, auf einer Anzeigeeinrichtung (40) des Luftfahrzeugs (1) angezeigt werden.

**Claims**

1. Method for controlling a rotary-wing aircraft (1) at a high forward speed, comprising

    - a fuselage (2),
    - at least one main rotor (3) provided with a plurality of blades (31),
    - at least one pusher propeller (4) having variable pitch,
    - at least two half-wings (11, 11') positioned on either side of said fuselage (2),
    - an aerodynamic means of said aircraft (1) comprising at least one movable flap (12, 12') on each half-wing (11, 11') and at least one system for moving said flaps (12, 12'),
    - at least one horizontal stabiliser (20) positioned at one end of said aircraft (1), said horizontal stabiliser (20) comprising at least one movable surface (21, 21'), and
    - at least one engine (5) which rotates said main rotor (3) and each pusher propeller (4),
    in which method
    - the total lift of the aircraft (1) is determined on the basis that said total lift opposes the weight of said aircraft (1),
    - a difference in lift between said two half-wings (11, 11') required to compensate for the effects of said main rotor (3) on said half-wings (11, 11') is determined, and
    - during a stabilised flight phase, the lift of each half-wing (11, 11') is adjusted by acting on said system for moving said flaps (12, 12') such that:

        ° the sum of said lift of said half-wings (11, 11') is equal to a first predetermined percentage of said total lift of said aircraft (1) during a stabilised flight phase, and
        ° said difference in lift between said two half-wings (11, 11') is obtained.

2. Method according to claim 1, **characterised in that** said lift of said half-wings (11, 11') is equal to 40% of said total lift of said aircraft (1).

3. Method according to either claim 1 or claim 2, **characterised in that** said weight of said aircraft (1) is determined from the fuel consumption of said engine (5).

4. Method according to any of claims 1 to 3, **characterised in that** said lift of said half-wings (11, 11') is determined using the following equation: $Z_{wing} = 1/2.\rho.TAS^2.S.C_z$,

    where "$Z_{wing}$" represents said lift of said two half-wings (11, 11'),
    "$\rho$" represents the air density under flight conditions,
    "$TAS$" represents the forward speed of said aircraft (1),
    "$S$" represents the total surface area of the two half-wings (11, 11'),
    "$C_z$" represents the average lift coefficient of said two half-wings (11, 11'), which coefficient is a function of the aerodynamic angle of incidence a of said half-wings (11, 11') where $\alpha = \alpha_{fus} + \alpha_{Interaction}$,
    "$\alpha_{fus}$" represents the aerodynamic angle of incidence of said aircraft (1) and is determined by: $\alpha_{fus} = \theta - Arcsin\ (Vz/TAS)$,
    "$\alpha_{Interaction}$" represents an incidence correction of said half-wings (11, 11'),
    "$Vz$" represents the vertical speed of the air relative to said aircraft (1),
    "$\theta$" represents the pitch attitude of said aircraft (1), and
    "." represents the multiplication sign,
    and said lift of said half-wings (11, 11') is then adjusted such that said lift of said half-wings (11, 11') is equal to said first predetermined percentage of said total lift of the aircraft (1).

5. Method according to any of claims 1 to 3, **characterised in that**, with said main rotor (3) being driven by a main power transmission gearbox (6) connected to said fuselage (2) by a plurality of support bars (7), forces on said support bars (7) are measured and the lift of said main rotor (3) is determined from the measurements of said forces on said support bars (7), said lift of said half-wings (11, 11') being equal to a difference between said total lift of the aircraft (1) and said lift of said main rotor (3).

**6.** Method according to any of claims 1 to 5, **characterised in that** said lift of said half-wings (11, 11') is adjusted when:

- the roll angle of said aircraft (1) is less than 10°,
- the forward speed TAS of said aircraft (1) is greater than 50 kts, and
- no action on the controls of said aircraft (1) is detected.

**7.** Method according to any of claims 1 to 6, **characterised in that** a set lateral cyclic pitch is determined such that said difference in lift between said two half-wings (11, 11') allows a lateral cyclic pitch of said blades of said main rotor (3) to be equal to said set lateral cyclic pitch.

**8.** Method according to any of claims 1 to 6, **characterised in that** a set lateral bending moment is determined such that said difference in lift between said two half-wings (11, 11') allows a lateral bending moment of a mast of said main rotor (3) to be equal to said set lateral bending moment.

**9.** Method according to any of claims 1 to 8, **characterised in that** the lift of said horizontal stabiliser (20) is adjusted by acting on a means for moving each movable surface (21, 21') such that a longitudinal cyclic pitch of said blades of said main rotor (3) is equal to a set longitudinal cyclic pitch.

**10.** Method according to any of claims 1 to 8, **characterised in that** the lift of said horizontal stabiliser (20) is adjusted by acting on a means for moving each movable surface (21, 21') such that a power of said main rotor (3) is equal to a set power during said stabilised flight phase.

**11.** Method according to claim 10, **characterised in that** said set power of said main rotor (3) in a stabilised flight phase corresponds to a value between 20 and 40% of the power of said main rotor (3) during a hovering flight of said aircraft (1).

**12.** Method according to any of claims 1 to 8, **characterised in that** the lift of said horizontal stabiliser (20) is adjusted by acting on a means for moving each movable surface (21, 21') such that a longitudinal bending moment of a mast of said main rotor (3) is equal to a set longitudinal bending moment during said stabilised flight phase.

**13.** Method according to any of claims 1 to 12, **characterised in that** the following are simultaneously determined:

- the longitudinal cyclic pitch of said blades of said main rotor (3) such that a pitch attitude of said aircraft (1) is equal to a set pitch attitude,
- the collective pitch of said blades of said main rotor (3) such that the altitude of said aircraft (1) is equal to a set altitude or even that the incidence of said aircraft (1) is equal to a set incidence,
- the lateral cyclic pitch of said blades of said main rotor (3) such that a bank attitude of said aircraft (1) is equal to a set bank attitude,
- the lift of said horizontal stabiliser (20) such that a power of said main rotor (3) is equal to an objective power,
- the lift of said half-wings (11, 11') corresponding to said first predetermined percentage of said total lift of said aircraft (1),
- the difference in lift between each half-wing (11, 11') in order to compensate for the asymmetry in incidence generated by said main rotor (3) between said half-wings (11, 11').

**14.** Method according to any of claims 1 to 13, **characterised in that** information relating to said lift of said main rotor (3) and to said set lift of said main rotor (3), at least one item of information relating to said flaps (12, 12') and at least one item of information relating to said horizontal stabiliser (20) are displayed on a display means (40) of said aircraft (1).

Fig.1

Fig.2

Fig.3

Fig.4

Fig.5

## Fig.6

34
60%
33
3
55%
11
12
15
20
21
25
1
+7°
Mode **A** / **M** / **F**
16
+2°
Mode **A** / **M** / **F**
26
11
11'
12
12'
−1°
17
+1°
18
40

**RÉFÉRENCES CITÉES DANS LA DESCRIPTION**

**Documents brevets cités dans la description**

- US 20080237392 A
- FR 2959205
- FR 2916420
- WO 2005005250 A
- FR 2916419